# EUROPEAN PATENT APPLICATION

(11) **EP 3 210 722 A2**
(43) Date of publication of application: **30.08.2017**
(21) Application number: 17157710.9
(22) Date of filing: 23.02.2017
(51) Int. Cl.: B24B 33/02, B24B 47/12, B23Q 5/00, H02K 16/00, B23Q 5/32, B24B 55/02

(54) **SYSTEMS AND METHODS FOR HONING A SHAFT**

(30) Priority: 24.02.2016 US 201615052424
(71) Applicant: General Electric Company, Schenectady, NY 12345 (US)
(72) Inventor: BLAIS, Donald Thomas, Schenectady, NY 12345 (US); FORG, Todd Joseph, Murrieta, CA 92562 (US); SASSATELLI, John Matthew, Schenectady, NY 12345 (US)
(74) Representative: Foster, Christopher Michael

(57) **Abstract**

A system (200) for honing a shaft (116) is provided. The system includes a rod (290) having an axis (356) and a head (210, 218) coupleable to the rod (290). The system also includes a drive motor (318) coupleable to the rod (290) such that the rod (290) and the head (210, 218) are rotatable via the drive motor (318). The system further includes a linear actuator (240, 294) coupleable to the rod (290) such that the rod (290) and the head (210, 218) are translatable along the axis while being rotated via the drive motor (318).

## Description

### BACKGROUND

The field of this disclosure relates generally to bore honing systems and, more particularly, to a system for honing a turbine or generator shaft.

At least some known power plants include a steam generator, a turbine, and an electrical generator. The steam generator boils water to generate steam, and the steam is channeled through the turbine. As the steam flows through the turbine, the steam drives a rotor of the turbine, which in turn drives the electrical generator to which the rotor is coupled.

The rotor typically has a shaft and a plurality of blades coupled to the shaft. Because the rotor blades and the rotor shaft experience thermal and mechanical stresses during operation of the turbine, it is desirable to periodically inspect the structural integrity of the rotor blades and the rotor shaft. At least some known inspection techniques include coupling a plurality of probes to the rotor shaft within a bore of the rotor shaft, and then transmitting electromagnetic energy through the rotor shaft via the probes to facilitate identifying structurally weakened areas of rotor shaft. Before attaching the probes, the bore of the rotor shaft is often honed using a tool that removes undesirable surface contours and/or build-up within the bore, thereby enabling better contact between the probes and the rotor shaft. However, at least some known honing techniques are overly time-consuming, which can delay the inspection process and cause the associated generator to be offline (and unable to generate electricity) for an undesirable length of time, resulting in a significant loss in revenue for the power plant.

### BRIEF DESCRIPTION

In one aspect, a system for honing a shaft is provided. The system includes a rod having an axis and a head coupleable to the rod. The system also includes a drive motor coupleable to the rod such that the rod and the head are rotatable via the drive motor. The system further includes a linear actuator coupleable to the rod such that the rod and the head are translatable along the axis while being rotated via the drive motor.

In another aspect, a method for honing a shaft is provided. The method includes coupling an adapter to the shaft and operating a drive motor to rotate a rod having a head coupled thereto. The method also includes operating a linear actuator to translate the rod and the head along an axis of the rod while the rod and the head are rotated via the drive motor.

In another aspect, a drive assembly for rotating and translating a rod is provided. The drive assembly includes a drive motor, a servomotor, and at least one drive roller rotatably coupled to the drive motor. The drive assembly also includes at least one steering roller having a roller axis about which the at least one steering roller is rotatable. The at least one steering roller is coupled to the servomotor such that the at least one steering roller is pivotable via the servomotor about a pivot axis oriented substantially perpendicular to the roller axis. The at least one steering roller is spaced apart from the at least one drive roller to define a passage sized to receive the shaft.

### BRIEF DESCRIPTION OF THE DRAWINGS

Figure 1 is a schematic illustration of an exemplary power plant;
Figure 2 is a schematic illustration of a system for use in honing a turbine rotor shaft of the power system shown in Figure 1;
Figure 3 is a schematic illustration of a drive assembly of the honing system shown in Figure 2 during a first state of operation;
Figure 4 is a schematic illustration of the drive assembly shown in Figure 3 during a second state of operation; and
Figure 5 is a schematic illustration of the drive assembly shown in Figure 3 during a third state of operation.

### DETAILED DESCRIPTION

The following detailed description illustrates shaft honing systems and methods by way of example and not by way of limitation. The description should enable one of ordinary skill in the art to make and use the honing systems, and the description describes several embodiments of the honing systems, including what is presently believed to be the best modes of making and using the honing systems. Exemplary honing systems are described herein as being useful for honing a turbine rotor shaft. However, it is contemplated that the honing systems have general application to a broad range of systems in a variety of fields other than turbines.

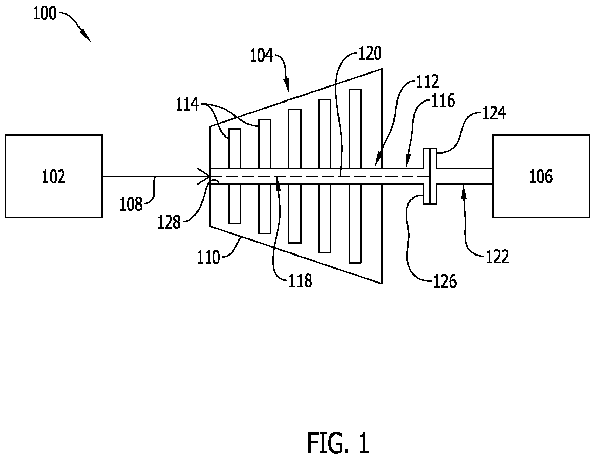

Figure 1 illustrates an exemplary power plant 100. In the exemplary embodiment, power plant 100 includes a steam generator 102, a turbine 104, and an electrical generator 106. Steam generator 102 boils water to generate steam 108, and steam 108 is channeled through turbine 104. Turbine 104 includes casing 110 and a rotor 112 positioned at least in part within casing 110. Rotor 112 has a plurality of blades 114 coupled to a shaft 116 having a bore 118 and an axis 120 extending through bore 118. Generator 106 includes a drive shaft 122 having a flange 124, and rotor shaft 116 of turbine 104 likewise has a flange 126 detachably coupled (e.g., bolted) to drive shaft flange 124. In other embodiments, rotor shaft 116 may be coupled to drive shaft 122 in any suitable manner. Moreover, in some embodiments, power plant 100 may further include a gas turbine assembly (not shown) that channels its exhaust to steam generator 102 for heating steam generator 102, and optionally provides shaft power to another electrical generator (not shown), such that power plant 100 is a combined cycle power plant.

During operation of power plant 100, steam 108 flowing through turbine 104 causes rotor 112 to rotate (i.e., causes rotor blades 114 and rotor shaft 116 to rotate), which in turn causes generator drive shaft 122 to rotate. Generator 106 generates electricity as a result. Because rotor 112 experiences higher levels of thermal and mechanical stress during operation, it is commonplace to periodically test the structural integrity of rotor 112 (e.g., by manually inspecting the structural connection of rotor blades 114 to rotor shaft 116, and/or by electromagnetically inspecting the structural continuity of rotor shaft 116 using, for example, a plurality of probes (not shown) coupled to rotor shaft 116 within bore 118). However, it is typical for an inner surface 128 of rotor shaft 116, which defines bore 118, to have a contour and/or a level of build-up that makes it difficult to couple the probes to rotor shaft 116 within bore 118. As such, it is often desirable to hone (e.g., abrade and/or polish) inner surface 128 to enable a better connection between the probes and inner surface 128.

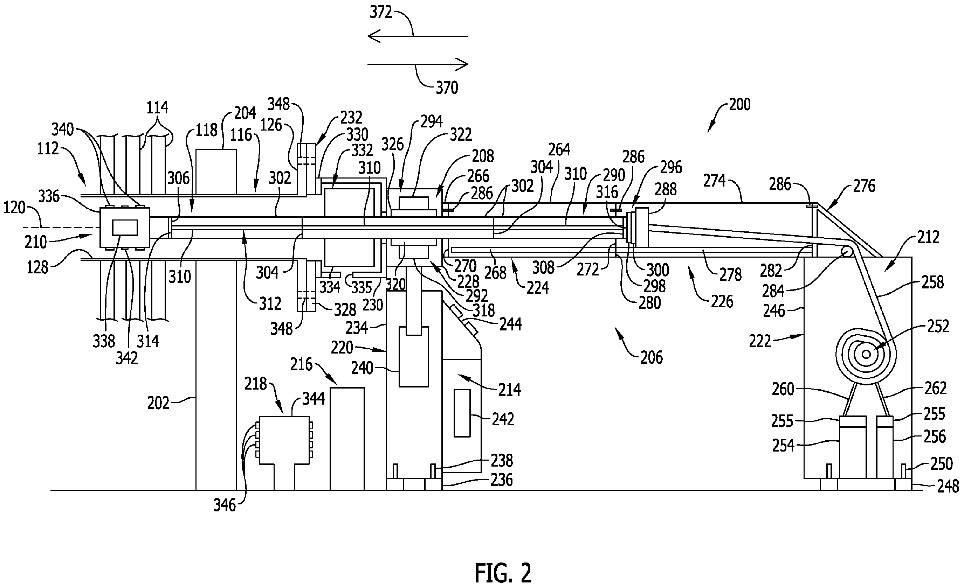

Figure 2 is a schematic illustration of a system 200 for honing a shaft such as turbine rotor shaft 116 (or, alternatively, generator drive shaft 122). In the exemplary embodiment, system 200 is designed for use in honing rotor shaft 116 after turbine rotor 112 has been removed from turbine casing 110. More specifically, in advance of coupling the probes to shaft inner surface 128 for conducting an inspection of rotor shaft 116, rotor 112 (e.g., blades 114 and shaft 116) is removed from turbine casing 110 and mounted on a frame 202 such that rotor blades 114 and rotor shaft 116 are rotatable relative to frame 202 using, for example, an electric motor 204. Optionally, in other embodiments, system 200 may be designed for use in honing rotor shaft 116 while rotor 112 is installed within turbine casing 110.

In the exemplary embodiment, system 200 includes a support assembly 206, a drive assembly 208 coupleable to support assembly 206, a honing head 210 coupleable to drive assembly 208, and a fluid supply assembly 212 coupleable to honing head 210. System 200 also includes a control unit 214 for operating support assembly 206, drive assembly 208, honing head 210, and/or fluid supply assembly 212 as described below. Optionally, system 200 may further include a sump 216, and/or a cleaning head 218 coupleable to drive assembly 208 in lieu of honing head 210. In other embodiments, system 200 may have any suitable number of head assemblies that are interchangeably coupleable to drive assembly 208 for any suitable purposes.

In the exemplary embodiment, support assembly 206 includes at least one pedestal (e.g., a first pedestal 220 and a second pedestal 222), at least one truss assembly (e.g., a first truss assembly 224 and a second truss assembly 226), a drive housing 228, a head housing 230, and an adapter 232. First pedestal 220 has a housing 234 seated on a plurality of casters 236. Each caster 236 is coupled to pedestal housing 234 via a ratchet mechanism 238 such that the vertical position of pedestal housing 234 relative to casters 236 is adjustable via ratchet mechanisms 238. Moreover, first pedestal 220 has a linear actuator 240 (e.g., a pneumatic linear actuator) contained at least in part within pedestal housing 234. Drive housing 228 is mounted to linear actuator 240 such that the vertical position of drive housing 228 relative to pedestal housing 234 is adjustable via linear actuator 240. Additionally, control unit 214 includes a computing device 242 and a user-interface 244, both of which are coupled to pedestal housing 234 such that user-interface 244 is accessible outside of pedestal housing 234. Computing device 242 is communicatively coupled to linear actuator 240 for operating linear actuator 240 in the manner described herein. In other embodiments, first pedestal 220 may have any suitable mechanism(s) for adjusting the vertical position of pedestal housing 234 and/or drive housing 228 in a manner that facilitates enabling system 200 to function as described herein.

In the exemplary embodiment, second pedestal 222 has a housing 246 seated on a plurality of casters 248. Each caster 248 is coupled to pedestal housing 246 via a ratchet mechanism 250 such that the vertical position of pedestal housing 246 relative to casters 248 is adjustable via ratchet mechanisms 250. Additionally, fluid supply assembly 212 includes a reel 252 and at least one fluid reservoir (e.g., a liquid reservoir 254 and a gas reservoir 256) positioned at least in part within pedestal housing 246. Moreover, fluid supply assembly 212 also includes at least one fluid conduit (e.g., a fluid conduit bundle 258 having at least one liquid conduit 260 coupled in flow communication with liquid reservoir 254 and at least one gas conduit 262 coupled in flow communication with gas reservoir 256). Conduits 260 and 262 are wound about reel 252, and reel 252 is spring-biased to continuously impart a retracting (or winding) force to conduits 260 and 262 such that conduits 260 and 262 are unwindable from reel 252 as desired by imparting a pulling force to conduits 260 and 262 that overcomes the retracting force of reel 252. Optionally, second pedestal 222 may have a linear actuator (not shown) (e.g., a pneumatic linear actuator like linear actuator 240) communicatively coupled to computing device 242 to facilitate adjusting the vertical position of truss assemblies 224 and 226 relative to pedestal housing 246. Second pedestal 222 may also include at least one pump 255 for supplying liquid and/or gas from liquid reservoir 254 and/or gas reservoir 256, respectively, to honing head 210 and/or cleaning head 218, as set forth in more detail below.

In the exemplary embodiment, first truss assembly 224 includes a first truss 264, a first bracket 266, and a first rail 268. First truss 264 has a first end 270 and a second end 272. First rail 268 is coupled to first truss 264 between first end 270 and second end 272, and first bracket 266 is coupled to drive housing 228. Similarly, second truss assembly 226 includes a second truss 274, a second bracket 276, and a second rail 278. Second truss 274 has a first end 280 and a second end 282, and second rail 278 is coupled to second truss 274 between first end 280 and second end 282. Second bracket 276 has a conduit roller 284 and is mounted to pedestal housing 246 such that second bracket 276 projects from pedestal housing 246.

First end 270 of first truss 264 is coupleable to first bracket 266 via a plurality of pins 286, and second end 272 of first truss 264 is coupleable to first end 280 of second truss 274 via a plurality of pins 286. Likewise, second end 282 of second truss 274 is coupleable to second bracket 276 via a plurality of pins 286. First truss 264 and second truss 274 thereby collectively extend between first pedestal 220 and second pedestal 222, such that first rail 268 and second rail 278 are aligned with one another. Notably, pins 286 are of the quick-release type, in that pins 286 are manually removable via a pulling action to facilitate easier disassembly of first truss 264 and second truss 274. Moreover, first truss 264 and second truss 274 are fabricated at least in part from a composite material (e.g., a carbon fiber material) to facilitate reducing their overall weight, thereby enhancing the portability of system 200. In other embodiments, support assembly 206 may have any suitable number of pedestals and/or trusses (e.g., support assembly 206 may have only one pedestal and/or only one truss). For example, in some embodiments, support assembly 206 may have three or more trusses (e.g., five trusses) that are coupleable together via pins 286.

In the exemplary embodiment, drive assembly 208 includes a shuttle 288, a rod 290, a rod rotating unit 292, and a linear actuator 294. Shuttle 288 is coupleable to rails 268 and 278 such that shuttle 288 is slidable along rails 268 and 278 (and, therefore, along trusses 264 and 274). Moreover, shuttle 288 includes a conduit joint 296 having a first joint segment 298 and a second joint segment 300 coupled to first joint segment 298 such that first joint segment 298 is rotatable relative to second joint segment 300. Rod 290 has a plurality of sections 302 (e.g., five rod sections 302) that are coupleable together (e.g., via threaded engagement(s) 304) to extend the length of rod 290 as desired, such that the section(s) 302 define a first end 306 and a second end 308 of rod 290. Notably, each rod section 302 has at least one internal conduit section 310 extending along its length such that, when rod sections 302 are coupled together, rod 290 defines at least one internal conduit 312 that extends from rod first end 306 to rod second end 308. In other embodiments, rod 290 may not have a plurality of detachable sections 302 but, rather, may be a single, unitary structure between first end 306 and second end 308.

In the exemplary embodiment, rod first end 306 has a first mount 314, and rod second end 308 has a second mount 316. Second mount 316 is coupleable to first joint segment 298 of conduit joint 296, and first mount 314 is coupleable to honing head 210 and cleaning head 218 such that rod 290 extends through head housing 230 and drive housing 228, and along first truss assembly 224 and second truss assembly 226. As such, rod 290 extends between rod rotating unit 292 and linear actuator 294 within drive housing 228. More specifically, as set forth in more detail below, rod rotating unit 292 includes at least one drive motor 318 and a drive roller assembly 320 rotatably coupled thereto via a suitable arrangement of gears (not shown), and linear actuator 294 includes at least one servomotor 322 and a steering roller assembly 326 pivotably coupled thereto via a suitable arrangement of gears (not shown). Drive motor 318 and servomotor 322 are communicatively coupled to computing device 242.

In the exemplary embodiment, adapter 232 includes a flange 328 and is coupled to head housing 230 at a bearing 330 such that adapter 232 is rotatable relative to head housing 230. Head housing 230 defines an interior space 332 sized to receive honing head 210 and cleaning head 218. Moreover, head housing 230 defines at least one window 334 sized to permit insertion of honing head 210 and cleaning head 218 into interior space 332 for detachably and interchangeably coupling honing head 210 and cleaning head 218 to rod 290 via window(s) 334. Additionally, head housing 230 has at least one aperture 335 for draining liquid from interior space 332 into sump 216, which is positionable beneath head housing 230. In other embodiments, head housing 230 may not have window(s) 334 and/or aperture(s) 335.

In the exemplary embodiment, honing head 210 includes a shell 336 coupleable to rod 290 at first mount 314, a pneumatic actuator 338 contained within shell 336, a plurality of honing elements 340 (e.g., abrasive elements such as, for example, stones or other natural abrasives) coupled to pneumatic actuator 338 within shell 336, and a plurality of nozzles 342 coupled to shell 336 and oriented to discharge liquid away from shell 336 as described below. Notably, pneumatic actuator 338 is communicatively coupled to computing device 242 for increasing and/or decreasing the length by which honing elements 340 extend from shell 336, thereby enabling honing elements 340 to be selectively protracted away from shell 336 and selectively retracted towards shell 336 as desired. In other embodiments, honing head 210 may have any suitable number of honing element(s) 340 and/or nozzle(s) 342 arranged in any suitable manner that facilitates enabling system 200 to function as described herein (e.g., honing head 210 may have only one honing element 340 and/or only one nozzle 342). Similarly, cleaning head 218 includes a shell 344 coupleable to rod 290 at first mount 314, and a plurality of nozzles 346 coupled to shell 344 and oriented to discharge liquid away from shell 344 as described below.

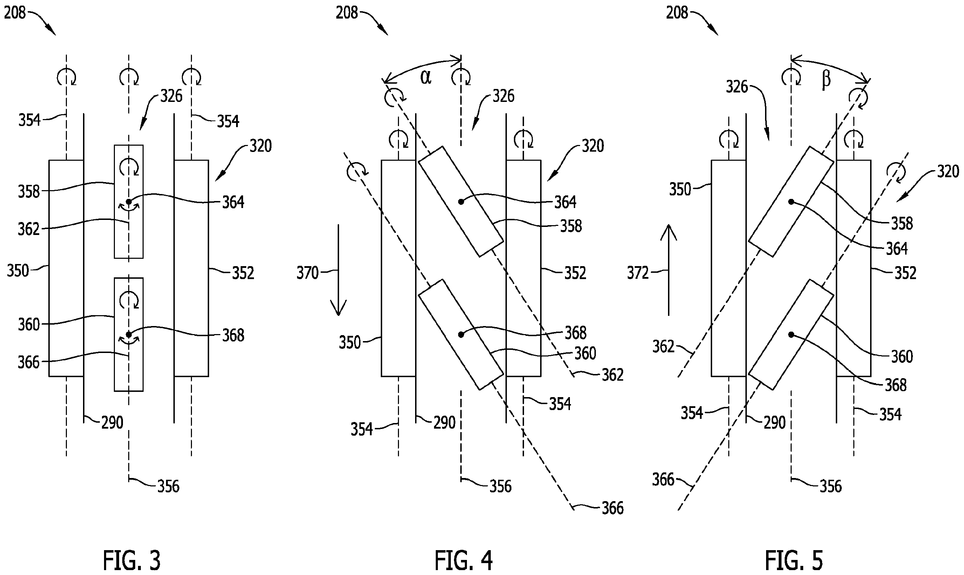

Figures 3-5 are schematic illustrations of drive assembly 208 during various states of operation. In the exemplary embodiment, drive roller assembly 320 includes at least one drive roller (e.g., a first drive roller 350 and a second drive roller 352) rotatably coupled to drive motor 318. Thus, by operating drive motor 318 via computing device 242, drive rollers 350 and 352 are caused to rotate in the same direction (e.g., clockwise) about their respective roller axes 354. First drive roller 350 is horizontally spaced apart from second drive roller 352 such that axes 354 are oriented substantially parallel to one another, and such that rod 290 is seatable on drive rollers 350 and 352 at least in part between axes 354 (i.e., a lengthwise axis 356 of rod 290 is positionable between axes 354 of drive rollers 350 and 352). In other embodiments, drive roller assembly 320 may have any suitable number of driver rollers arranged in any suitable manner that facilitates enabling drive assembly 208 to function as described herein.

In the exemplary embodiment, steering roller assembly 326 includes at least one steering roller (e.g., a first steering roller 358 and a second steering roller 360) positionable against rod 290 such that steering rollers 358 and 360 impart a downward force on rod 290 to firmly seat rod 290 against drive rollers 350 and 352. Thus, when rod 290 is rotated by drive rollers 350 and 352, steering rollers 358 and 360 are caused to rotate in the same direction as drive rollers 350 and 352 (and rod 290) as a result of steering rollers 358 and 360 being in contact with rod 290. First steering roller 358 has a roller axis 362 such that first steering roller 358 is rotatable about roller axis 362. Moreover, first steering roller 358 is coupled to servomotor 322 such that first steering roller 358 is pivotable about a pivot axis 364 oriented substantially perpendicular to roller axis 362. Similarly, second steering roller 360 has a roller axis 366 such that second steering roller 360 is rotatable about roller axis 366, and second steering roller 360 is coupled to servomotor 322 such that second steering roller 360 is pivotable about a pivot axis 368 oriented substantially perpendicular to roller axis 366. First steering roller 358 and second steering roller 360 (as shown in Figure 3) are spaced apart from one another in substantially coaxial alignment (i.e., roller axes 362 and 366 are substantially collinearly aligned with one another in parallel with rod axis 356). As a result, when servomotor 322 is operated via computing device 242, steering rollers 358 and 360 are pivotable (in parallel) either counterclockwise about their respective pivot axes 364 and 368 (as shown in Figure 4) such that roller axes 362 and 366 are oriented at an angle α (e.g., about -15° or less) relative to rod axis 356, or clockwise about their respective pivot axes 364 and 368 (as shown in Figure 5) such that roller axes 362 and 366 are oriented at an angle β (e.g., about 15° or less) relative to rod axis 356.

As such, drive assembly 208 has three different states of operation, namely: (1) a first state of operation (as shown in Figure 3) in which servomotor 322 orients steering rollers 358 and 360 such that roller axes 362 and 366 are substantially parallel to rod axis 356, thereby enabling rod 290 to rotate about rod axis 356 without translating along rod axis 356; (2) a second state of operation (as shown in Figure 4) in which servomotor 322 orients steering rollers 358 and 360 such that roller axes 362 and 366 define angle α relative to rod axis 356, thereby enabling rod 290 to rotate about rod axis 356 while translating along rod axis 356 in a backward direction 370 (i.e., steering rollers 358 and 360 effectively function as left-handed threads that cause rod 290 to spiral backward); and (3) a third state of operation (as shown in Figure 5) in which servomotor 322 orients steering rollers 358 and 360 such that roller axes 362 and 366 define angle β relative to rod axis 356, thereby enabling rod 290 to rotate about rod axis 356 while translating along rod axis 356 in a forward direction 372 (e.g., steering rollers 358 and 360 effectively function as right-handed threads that cause rod 290 to spiral forward).

Thus, drive motor 318 is operable via computing device 242 to vary the speed (and optionally the direction) at which rod 290 rotates about rod axis 356, while servomotor 322 is operable via computing device 242 to vary the direction in which rod 290 translates along rod axis 356. For example, the frequency of the back-and-forth oscillation of rod 290 along rod axis 356 is controllable via computing device 242 (e.g., via wireless limit switches communicatively coupled to computing device 242) to control the length of each backward stroke and each forward stroke of rod 290 in a manner that suits a desired honing pattern. Notably, by virtue of functioning as threads for translating rod 290 forward and/or backward along rod axis 356, steering rollers 358 and 360 enable linear actuator 294 to function as a mechanical linear actuator by mechanically converting the rotational motion of rod 290 into linear motion of rod 290. In other embodiments, however, linear actuator 294 may be of any suitable type (e.g., a pneumatic linear actuator, a hydraulic linear actuator, an electric linear actuator, etc.) that does not utilize the rotational motion of rod 290 to displace rod 290 linearly.

Referring back to Figure 2, when conducting a honing operation on rotor shaft 116 of turbine 104 using system 200, rotor 112 is first removed from turbine casing 110 and mounted to frame 202 such that rotor 112 is rotatable on frame 202 via motor 204. With honing head 210 positioned inside interior space 332 of head housing 230, pedestals 220 and 222 are then rolled on casters 236 and 248, respectively, to horizontally align adapter 232 with flange 126 of rotor shaft 116. Adapter 232 is then vertically aligned with flange 126 by operating linear actuator 240 via computing device 242 to raise head housing 230 (and, therefore, adapter 232) relative to first pedestal 220, and/or by manually adjusting ratchet mechanisms 238 and/or 250 to raise the respective pedestal housings 234 and/or 246 relative to the respective casters 236 and/or 248. After horizontally and vertically aligning adapter 232 with flange 126, adapter 232 is then coupled to flange 126 via a plurality of fasteners 348 (e.g., bolts).

With adapter 232 coupled to flange 126, drive assembly 208 is operable to rotate and translate honing head 210 forward from head housing 230 into bore 118 of rotor shaft 116. Pneumatic actuator 338 is then operable via computing device 242 to draw gas (not shown) from gas reservoir 256 across gas conduit 262 and an internal conduit 312 of rod 290 for pneumatically protracting honing elements 340 away from shell 336 and into contact with inner surface 128 of rotor shaft 116. Additionally, the pump 255 associated with liquid reservoir 254 is also operable via computing device 242 to supply honing liquid (not shown) from liquid reservoir 254 to honing head 210 via liquid conduit 260 and an internal conduit 312 of rod 290 for discharging the honing liquid from nozzles 342 onto inner surface 128 of rotor shaft 116.

With honing elements 340 seated against inner surface 128 and the honing liquid being discharged onto inner surface 128, drive assembly 208 is operable via computing device 242 to oscillate rod 290 (and honing head 210) back-and-forth inside bore 118 of rotor shaft 116 as described above. Thus, inner surface 128 is honed (i.e., abraded and/or polished) in an automated manner (i.e., rod 290 is not manually walked or pushed/pulled back-and-forth within bore 118). During the honing operation, the honing liquid drains from bore 118 into sump 216 via aperture(s) 335 of head housing 230, thereby removing debris generated by honing elements 340 inside bore 118. Moreover, the honing liquid also facilitates cooling the interface between honing elements 340 and inner surface 128 during the honing operation. Optionally, sump 216 may be coupled in flow communication with liquid reservoir 254 via suitable conduit(s) (not shown) such that, after the honing liquid collected within sump 216 is filtered (either inside sump 216 or by a separate filtration assembly (not shown) coupled to sump 216), the filtered honing liquid is then recirculated to liquid reservoir 254 for reuse.

As honing head 210 oscillates back-and-forth within bore 118, shuttle 288 is displaced along rails 268 and 278, while rod 290 rotates relative to shuttle 288 at conduit joint 296. Notably, drive motor 318 remains stationary when rod 290 oscillates back-and-forth. Additionally, because reel 252 is spring-biased to retract conduit bundle 258, reel 252 releases additional lengths of conduit bundle 258 with each forward stroke of rod 290, and winds excess lengths of conduit bundle 258 with each backward stroke of rod 290. Moreover, because adapter 232 is rotatable relative to head housing 230 via bearing 330, rotor 112 is rotatable during the honing operation to enable simultaneous inspection of rotor blades 114 and/or their attachment to rotor shaft 116. Optionally, additional rod sections 302 may be inserted to increase the length of rod 290 when honing longer rotor shafts, and additional trusses may likewise be inserted between first truss 264 and second truss 274 via pins 286 to suit the increased length of rod 290.

After inner surface 128 is adequately honed via honing head 210, pneumatic actuator 338 is operated via computing device 242 to retract honing elements 340 away from inner surface 128 and towards shell 336, and drive assembly 208 is then operated via computing device 242 to retract rod 290 backward for repositioning honing head 210 inside interior space 332 of head housing 230. Honing head 210 is then detachable from first mount 314 for removal from head housing 230 via window(s) 334. Subsequently, cleaning head 218 may be inserted into interior space 332 of head housing 230 via window(s) 334 for coupling cleaning head 218 to first mount 314. Drive assembly 208 may then be operated to translate cleaning head 218 forward into bore 118, for discharging cleaning liquid from nozzles 346 onto inner surface 128 and then draining the discharged cleaning liquid (and associated debris suspended therein) from bore 118 into sump 216. Optionally, the cleaning liquid may be contained within liquid reservoir 254 and supplied to cleaning head 218 via the associated pump 255, or the cleaning liquid may be suitably contained in a third reservoir (not shown) and supplied via another pump (not shown), both of which may be positioned within housing 246 of second pedestal 222.

After honing and cleaning inner surface 128 of rotor shaft 116 as desired, adapter 232 may then be uncoupled from flange 126, and pedestals 220 and 222 rolled away from rotor 112 (via their respective casters 236 and 248), and/or drive assembly 208 may be lowered (e.g., via ratchet mechanisms 238 and/or 250, and/or linear actuator 240) to permit the insertion of a borescope into bore 118 for inspecting bore 118. Moreover, the probes for use in inspecting rotor shaft 116 may then be inserted into bore 118 and coupled to inner surface 128 for conducting a more effective inspection of rotor shaft 116. Notably, system 200 is easily disassembled (e.g., via quick-release pins 286, threaded engagements 304, etc.), and is easily transportable due at least in part to its lighter weight that results from trusses 264 and 274 being made at least in part from a composite material (e.g., a carbon fiber material).

Some embodiments involve the use of one or more electronic or computing devices. Such devices typically include a controller or processing device such as a general purpose central processing unit (CPU), a graphics processing unit (GPU), a microcontroller, a reduced instruction set computer (RISC) processor, an application specific integrated circuit (ASIC), a programmable logic circuit (PLC), a field programmable gate array (FPGA), a digital signal processing (DSP) device, and/or any other circuit or processing device capable of executing the functions described herein. The methods described herein may be encoded as executable instructions embodied in a computer readable medium, including, without limitation, a storage device and/or a memory device. Such instructions, when executed by the controller or processing device, cause the controller or processing device to perform at least some of the method steps described herein. The above examples are exemplary only, and thus are not intended to limit in any way the definition and/or meaning of the terms controller and processing device.

The above-described embodiments include at least the following technical effects: (1) providing systems and methods for more effectively and efficiently honing a shaft such as, for example, a turbine rotor shaft; (2) providing shaft honing systems that are more easily assembled and disassembled; and (3) providing shaft honing systems that are more easily transported to a shaft inspection site.

The methods and systems described herein facilitate honing a shaft such as, for example, a turbine rotor shaft. More specifically, the methods and systems facilitate honing the inner surface of a turbine rotor shaft in advance of inspecting the turbine rotor shaft. For example, the methods and systems facilitate honing a turbine rotor shaft in a more automated manner, thereby reducing the time needed to hone the turbine rotor shaft. Additionally, the methods and systems facilitate providing a honing system that is more easily assembled and disassembled at the inspection site, and is more easily transported to and from the inspection site. As a result, the methods and systems facilitate reducing the amount of time that the associated electrical generator is offline, which in turn reduces the cost associated with inspecting the rotor of the associated turbine. This reduces the amount of revenue lost by the power plant as a result of the turbine rotor inspection process.

Exemplary embodiments of shaft honing systems and methods are described above in detail. The systems and methods described herein are not limited to the specific embodiments described herein, but rather, components of the systems and methods may be utilized independently and separately from other components described herein. For example, the systems and methods described herein may have other applications not limited to practice with turbines, as described herein. Rather, the systems and methods described herein can be implemented and utilized in connection with various other industries.

While the invention has been described in terms of various specific embodiments, those skilled in the art will recognize that the invention can be practiced with modification within the spirit and scope of the claims.

Various aspects and embodiments of the present invention are defined by the following clauses:
1. A system for honing a shaft, said system comprising:
   a rod having an axis;
   a head coupleable to said rod;
   a drive motor coupleable to said rod such that said rod and said head are rotatable via said drive motor; and
   a linear actuator coupleable to said rod such that said rod and said head are translatable along the axis while being rotated via said drive motor.
2. A system in accordance with clause 1, further comprising a pedestal on which said rod is supportable, said drive motor coupled to said pedestal such that said pedestal and said drive motor are stationary when said rod and said head translate along the axis.
3. A system in accordance with clause 1, wherein said linear actuator is a mechanical linear actuator.
4. A system in accordance with clause 3, wherein said linear actuator comprises a servomotor and a steering roller pivotably coupled to said servomotor.
5. A system in accordance with clause 4, further comprising a drive roller rotatably coupled to said drive motor, said rod positionable between said drive roller and said steering roller.
6. A system in accordance with clause 1, further comprising a truss to which said rod is coupleable such that said rod and said head are supportable by said truss.
7. A system in accordance with clause 6, further comprising a pedestal to which said truss is coupleable such that said truss is supportable by said pedestal, said pedestal comprising a linear actuator by which a vertical position of said truss is adjustable when said truss is coupled to said pedestal via said linear actuator.
8. A system in accordance with clause 7, further comprising a fluid reservoir and at least one conduit coupleable between said head and said fluid reservoir.
9. A method for honing a shaft, said method comprising:
   coupling an adapter to the shaft;
   operating a drive motor to rotate a rod having a head coupled thereto; and
   operating a linear actuator to translate the rod and the head along an axis of the rod while the rod and the head are rotated via the drive motor.
10. A method in accordance with clause 9, further comprising operating the linear actuator to oscillate the rod and the head back-and-forth along the axis.
11. A method in accordance with clause 9, further comprising operating a pump to supply a fluid to the head.
12. A method in accordance with clause 11, further comprising discharging a liquid from the head onto an inner surface of the shaft.
13. A method in accordance with clause 12, further comprising draining the discharged liquid from the shaft into a sump while the rod and the head are rotating.
14. A method in accordance with clause 9, further comprising operating a pneumatic actuator within the head to seat a plurality of abrasive elements against an inner surface of the shaft.
15. A method in accordance with clause 9, further comprising:
   detaching the head from the rod; and
   coupling another head to the rod.
16. A drive assembly for rotating and translating a rod, said drive assembly comprising:
   a drive motor;
   a servomotor;
   at least one drive roller rotatably coupled to said drive motor; and
   at least one steering roller having a roller axis about which said at least one steering roller is rotatable, said at least one steering roller coupled to said servomotor such that said at least one steering roller is pivotable via said servomotor about a pivot axis oriented substantially perpendicular to said roller axis, wherein said at least one steering roller is spaced apart from said at least one drive roller to define a passage sized to receive the shaft.
17. A drive assembly in accordance with clause 16, wherein said at least one drive roller comprises a first drive roller and a second drive roller oriented substantially parallel to one another in spaced-apart relation to receive the shaft in the passage such that the shaft is positioned between said drive rollers.
18. A drive assembly in accordance with clause 17, wherein said at least one steering roller comprises a first steering roller and a second steering roller that are pivotable via said servomotor.
19. A drive assembly in accordance with clause 18, wherein said steering rollers are coaxially alignable via said servomotor.
20. A drive assembly in accordance with clause 18, wherein said steering rollers are pivotable in parallel via said servomotor.

## Claims

1. A system (200) for honing a shaft (116), said system comprising:
a rod (290) having an axis (356);
a head (210, 218) coupleable to said rod (290);
a drive motor (318) coupleable to said rod (290); such that said rod (290); and said head (210, 218) are rotatable via said drive motor(318); and
a linear actuator (240, 294) coupleable to said rod (290) such that said rod (290) and said head (210, 218) are translatable along the axis while being rotated via said drive motor (318).

2. A system (200) in accordance with claim 1, further comprising a pedestal (220, 222) on which said rod (290) is supportable, said drive motor (318) coupled to said pedestal (220, 222) such that said pedestal (220, 222) and said drive motor (318) are stationary when said rod (290) and said head (210, 218) translate along the axis (356).

3. A system (200) in accordance with claim 1 or claim 2, wherein said linear actuator (240,294) is a mechanical linear actuator.

4. A system (200) in accordance with claim 3, wherein said linear actuator (240,294) comprises a servomotor (322) and a steering roller (358, 360) pivotably coupled to said servomotor (322).

5. A system (200) in accordance with any of preceding claims, further comprising a drive roller (350, 352) rotatably coupled to said drive motor (318), said rod (290) positionable between said drive roller (350, 352) and said steering roller (358, 360).

6. A system (200) in accordance with any of preceding claims, further comprising a truss (264, 274) to which said rod (290) is coupleable such that said rod (290) and said head (210, 218) are supportable by said truss (264, 274).

7. A system (200) in accordance with any of preceding claims, further comprising a pedestal (220, 222) to which said truss (264, 274) is coupleable such that said truss (264, 274) is supportable by said pedestal (220, 222), said pedestal (220, 222) comprising a linear actuator (240, 294) by which a vertical position of said truss (264, 274) is adjustable when said truss (264, 274) is coupled to said pedestal (220, 222) via said linear actuator (240, 294).

8. A system (200) in accordance with claim 7, further comprising a fluid reservoir (254, 256) and at least one conduit (258, 260, 262, 312) coupleable between said head (210, 218) and said fluid reservoir (254, 256).

9. A method for honing a shaft (116), said method comprising:
coupling an adapter (232) to the shaft (116);
operating a drive motor (318) to rotate a rod (290) having a head (210, 218) coupled thereto; and
operating a linear actuator (240, 294) to translate the rod (290) and the head (210, 218) along an axis (356) of the rod (290) while the rod (290) and the head (210, 218) are rotated via the drive motor (318).

10. A method in accordance with claim 9, further comprising operating the linear actuator (240, 294) to oscillate the rod (290) and the head (210, 218) back-and-forth along the axis (356).

11. A drive assembly (208) for rotating and translating a rod (290), said drive assembly (208) comprising:
a drive motor (318);
a servomotor (322);
at least one drive rollers (350, 352) rotatably coupled to said drive motor (318); and
at least one steering roller (358, 360) having a roller axis about which said at least one steering roller (358, 360) is rotatable, said at least one steering roller (358, 360) coupled to said servomotor such that said at least one steering roller (358, 360) is pivotable via said servomotor (322) about a pivot axis oriented substantially perpendicular to said roller axis, wherein said at least one steering roller (358, 360) is spaced apart from said at least one drive roller (350, 352) to define a passage sized to receive a shaft (116).

12. A drive assembly (208) in accordance with claim 11, wherein said at least one drive roller (350, 352) comprises a first drive roller (350) and a second drive roller (352) oriented substantially parallel to one another in spaced-apart relation to receive the shaft (116) in the passage such that the shaft (116) is positioned between said drive rollers (350, 352).

13. A drive assembly (208) in accordance with claim 12, wherein said at least one steering roller (358, 360) comprises a first steering roller (358) and a second steering roller (360) that are pivotable via said servomotor (322).

14. A drive assembly (208) in accordance with claim 13, wherein said steering rollers (358, 360) are coaxially alignable via said servomotor (322).

15. A drive assembly (208) in accordance with claim 13, wherein said steering rollers (358, 360) are pivotable in parallel via said servomotor (322).
